# EUROPEAN PATENT SPECIFICATION

(11) **EP 2 800 413 B1**
(45) Date of publication and mention of the grant of the patent: **07.08.2019**
(21) Application number: 12862412.9
(22) Date of filing: 09.04.2012
(51) Int. Cl.: H04W 28/08, H04W 36/22, H04W 92/12

(54) **METHOD AND APPARATUS FOR SERVICE EQUALIZATION**
VERFAHREN UND VORRICHTUNG FÜR EINE DIENST-ENTZERRUNG
PROCÉDÉ ET APPAREIL POUR UN ÉQUILIBRAGE DE SERVICES

(30) Priority: 31.12.2011 CN 201110458366
(43) Date of publication of application: 05.11.2014
(73) Proprietor: ZTE Corporation, Shenzhen, Guangdong 518057 (CN)
(72) Inventor: HE, Feng, Shenzhen Guangdong 518057 (CN); AI, Jianxun, Shenzhen Guangdong 518057 (CN)
(74) Representative: Novagraaf Technologies
(86) International application number: PCT/CN2012/073673
(87) International publication number: WO 2013/097373

(56) References cited:
- WO-A1-2008/079063
- WO-A1-2008/083933
- CN-A- 1 805 559
- CN-A- 101 087 475
- CN-A- 101 986 750
- US-A1- 2006 068 784
- ALCATEL-LUCENT ET AL: "Introduction of Service Handover", 3GPP DRAFT; R3-102863_SERVHO_36300CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Xi'an; 20101011, 2 October 2010 (2010-10-02), XP050453661, [retrieved on 2010-10-02]

## Description

### Technical Field

The present invention relates to the field of communications, and in particular, to a method and apparatus for service equalization.

### Background

With the continuous evolution of wireless communication technologies and standards, a mobile packet service is developed significantly, and the data throughout capability of a single terminal also increases continuously. Taking a long term evolution (LTE in short) system as an example, data transmission with a maximum downlink rate of 100 Mbps can be supported within 20 M bandwidth, and in a subsequent LTE advanced system, the data transmission rate will be improved further.

With the expanding increasing of the data service volume, the demand on the transmission rate and traffic by the terminal user is exhausting the 2G and 3G network resources, and the user experience also becomes worse. How to improve the user experience is an urgent thing for the operators to take into account. On the other hand, in order to provide higher service rate, the market puts more and more expectations on the deployment of the LTE networks. However, in actual networking, the replacement of the commercial networks cannot be accomplished at one stroke, and therefore, in a very long time in the future, before new technologies such as LTE have not yet reached full coverage and the old 2G and 3G network coverage have not yet been replaced fully, there will be a situation where multiple formats of networks cover the same area simultaneously. Due to the limit of terminal upgrade replacement and service demand, the operators wish to achieve a smoothly transit among multiple networks, and within at least 5 to 10 years in the future, 2G and 3G networks will still continue to provide some services. In the existing scenario of the coexistence of multiple networks, the load among multiple networks may be not equalized, which is mainly due to the change in the terminal type and service type of the user under the network coverage. For example, the domestic 2G network becomes jammed due to the introduction of the General Packet Radio Service (GPRS in short), and the 3G network is not fully used due to factors such as the number of users, and the load thereof is relatively low. There are fewer users for the emerging LTE network.

Currently, the operators continuously update various services provided for meeting user demand. However, some new types of services can only be borne in specific networks, for example, for some services with high rate and high traffic, they can only be borne in 3G or LTE networks. Therefore, before the 3G and the LTE networks realize full coverage, the user has to select to reside in the 3G/LTE network for obtaining a network with better Quality of Service (QoS in short), and the other services of the user, such as a voice service or a low-rate service, also have to be borne by the 3G/LTE network, which thus cannot realize the purpose of making the best of the network, and the service cannot be allocated flexibly. The above non-equalization of the users or services on one hand will decrease user experience; and on the other hand, the jammed network will also bring operation pressure to the operators. At the same time, other network resources cannot be used fully and this causes waste of network resources, increasing the Capital Expenditure (CAPEX in short) of the operators. With regard to the above problems, the operators have to seek for a new solution.

One implementation is to allow a current multi-mode mobile phone to access a plurality of networks for performing data transmission simultaneously. This not only can increase the absolute data throughput rate of the terminal, improve the user experience and draw more attraction from the terminal customers but also can make the best of the current network resources and reduce the capital expenditure of the operators. However, the existing method still cannot solve the problem of non-equalization of services among a plurality of networks. When the network performs load equalization according to the network load or planning policy, or the terminal finds a new inter-RAT cell, the existing method can only transfer all the services which are performed by the terminal among different cells as a whole. Such equalization is not flexible enough and cannot make the best of the existing network resources, and moreover, a plurality of networks accessed by the terminal cannot actually realize service equalization or make rational use of resources.

Aiming at the problem mentioned above, no effective solution has been presented.

Alcatel-Lucent et al, 'Introduction of Service Handover', 3GPP TSG-RAN WG3 Meeting #69bis, R3-102863, 2010.10.15 provides a related technical solution; however, the above mentioned problem still remains unsolved.

WO 2008/079063A1 provides a related technical solution, whereby a core network element, a SGSN, indicates to the radio access network through an IE Service Handover, whether a certain radio access bearer, RAB, should be handed over to GSM, should remain in UMTS as long as possible, or shall never be transferred to GSM. Said indication influences then UTRAN-initiated inter-system handover decisions. However, the above mentioned problem still remains unsolved.

### Summary

The embodiments of the present invention provide a method and apparatus for service equalization, so as to solve the technical problems in the related art that the scheduling of service equalization is not flexible and the utilization of the network resources is not reasonable, which are caused by transferring all services of a terminal as a whole between different networks at the time of service equalization.

The objectives of the present invention are achieved through the subject-matter of the independent claims. Preferred embodiments are set out in the dependent claims.

According to an aspect, a method for service equalization is provided, including: a source wireless access network element receiving service equalization indication information transmitted by a core network; and the source wireless access network element transferring, according to the service equalization indication information, parts of or all of service bearers of a terminal in a source network to a destination network, wherein the service bearer are user plane connection bearers established for transmitting terminal data.

Preferably, the service equalization indication information includes at least one of the following: identification information of a terminal which needs a service equalization operation, information of one or more service bearers which needs the service equalization operation, destination network information about the destination network, and a trigger condition for performing the service equalization operation.

Preferably, the information of the one or more service bearer includes: service bearer identification and/or service type of the service bearer; the destination network information includes at least one of the following: an RAT type of the destination network, cell identification of a destination cell in the destination network, and network element identification of the destination network; and the trigger condition includes: a network load threshold.

Preferably, when the service equalization indication information includes the identification information of the terminal, the source wireless access network element transferring, according to the service equalization indication information, parts of or all of the service bearers of the terminal in the source network to the destination network includes: the source wireless access network element determining a terminal corresponding to the terminal identification information and determining at least one service bearer to be transferred this time in services of the determined terminal; and the source wireless access network element transferring the determined service bearer to the destination network.

Preferably, when the service equalization indication information includes the service bearer identification and/or the service type of the service bearer, the source wireless access network element transferring, according to the service equalization indication information, parts of or all of the service bearers of the terminal in the source network to the destination network includes: the source wireless access network element selecting a terminal for executing a service corresponding to the service bearer identification and/or the service type of the service bearer; and the source wireless access network element transferring at least one service bearer in selected terminal corresponding to the service type to the destination network.

Preferably, when the service equalization indication information includes the destination network information, the source wireless access network element transferring, according to the service equalization indication information, parts of or all of the service bearers of the terminal in the source network to the destination network includes: the source wireless access network element selecting a terminal which supports the destination network indicated by the destination network information and determining, in services of the determined terminal, at least one service bearer to be transferred this time; and the source wireless access network element transferring the determined service bearer to the destination network indicated by the destination network information.

Preferably, when the service equalization indication information includes the network load threshold, the source wireless access network element transferring, according to the service equalization indication information, parts of or all of the service bearers of the terminal in the source network to the destination network includes: the source wireless access network element judging whether a network load of the source wireless access network element exceeds the network load threshold; and when the network load of the source wireless access network element exceeds the network load threshold, the source wireless access network element transfers parts of or all of the service bearers of the terminal in the source network to the destination network.

Preferably, before the source wireless access network element receives the service equalization indication information transmitted by the core network, the method further includes: the core network judging whether a load of a network element of the core network exceeds a network element load threshold; when the load of the network element of the core network exceeds the network element load threshold, the core network generating the service equalization indication information; and the core network sending the service equalization indication information to the source wireless access network element.

Preferably, the source network includes: a long term evolution system (LTE), an universal mobile telecommunications system (UMTS), and/or a global system for mobile communication (GSM); the source wireless access network element includes: an evolved node B (eNB), a radio network subsystem (RNS), a base station (NodeB), and/or a base station system (BSS); the core network includes: a mobile management entity (MME), a general packet radio service support node (SGSN), and/or a mobile switching center (MSC).

Preferably, the source wireless access network element transferring parts of or all of the service bearers of the terminal in the source network to the destination network includes: the source wireless access network element sending a handover request message or a redirection request message to the core network, wherein the handover request message or the redirection request message carries information for indicating a terminal involved in a current service equalization and transferring parts of or all of the service bearers on the terminal; and the core network transferring parts of or all of the service bearers of the terminal in the source network to the destination network according to the handover request message or the redirection request message.

According to another aspect, an apparatus for service equalization is provided, including: a receiving module configured to receive service equalization indication information transmitted by a core network; and a transfer module configured to transfer, according to the service equalization indication information, parts of or all of the service bearers of a terminal in the source network to a destination network, wherein the service bearers are user plane connection bearers established for transmitting terminal data.

Preferably, the transfer module includes: a determination unit configured to, when the service equalization indication information includes the identification information of the terminal, determine a terminal corresponding to the terminal identification information and determine at least one service bearer to be transferred this time in the services of the determined terminal; and a first transfer unit configured to transfer the determined service bearer to the destination network.

Preferably, the transfer module includes: a first selection module configured to, when the service equalization indication information includes the service bearer identification and/or the service type of the service bearer, select a terminal which performs a service corresponding to the service bearer identification and/or the service type of the service bearer; a second transfer unit configured to transfer at least one service bearer corresponding to the service type to the destination network.

Preferably, the transfer module includes: a second selection unit configured to, when the service equalization indication information includes the destination network information, select a terminal which supports the destination network indicated by the destination network information and determine at least one service bearer to be transferred this time in services of the determined terminal; a third transfer unit configured to transfer parts of or all of the service bearers in the determined terminal to the destination network indicated by the destination network information.

Preferably, the transfer module includes: a judgment unit configured to, when the service equalization indication information includes the network load threshold information, judge whether a network load of the source wireless access network element exceeds the network load threshold; a fourth transfer unit configured to, when the network load of the source wireless access network element exceeds the network load threshold, transfers parts of or all of the service bearers of the terminal in the source network to the destination network.

Preferably, the apparatus for service equalization further includes: a judgment module configured to judge whether a load of a network element of the core network exceeds a network element load threshold; a generation module configured to, when the load of the network element of the core network exceeds the network element load threshold, generate the service equalization indication information; and a sending module configured to send the service equalization indication information to the source wireless access network element.

Preferably, the transfer module includes: a sending unit configured to send a handover request message or a redirection request message to the core network, wherein the handover request message or the redirection request message carries information for indicating a terminal involved in a current service equalization and transferring parts of or all of the service bearers on the terminal; and a fifth transfer unit configured to transfer parts of or all of the service bearers of the terminal in the source network to the destination network according to the handover request message or the redirection request message.

In the present invention, parts of the service bearers in a terminal which need service equalization are transferred to another network according to a service equalization indication message sent by a core network, and service bearer transfer needs not be performed on the services in the terminal as a whole, which realizes partial transfer of the service bearers in the terminal and solves the technical problems in the related art that the scheduling of service equalization is not flexible and the utilization of the network resource is not reasonable, which are caused by transferring all the services of a terminal as a whole between different networks at the time of service equalization, therefore enabling partial transfer of the service bearers in the terminal, increasing the flexible of the service equalization, and realizing the reasonable utilization of the network resources.

### Brief Description of the Drawings

Drawings, provided for further understanding of the present invention and forming a part of the specification, are used to explain the present invention together with embodiments of the present invention rather than to limit the present invention. In the drawings:
Fig. 1 is a preferred structural block diagram of an apparatus for service equalization according to an embodiment of the present invention;
Fig. 2 is a preferred structural block diagram of a transfer module in an apparatus for service equalization according to an embodiment of the present invention;
Fig. 3 is another preferred structural block diagram of a transfer module in an apparatus for service equalization according to an embodiment of the present invention;
Fig. 4a is still another preferred structural block diagram of a transfer module in an apparatus for service equalization according to an embodiment of the present invention;
Fig. 4b is still another preferred structural block diagram of a transfer module in an apparatus for service equalization according to an embodiment of the present invention;
Fig. 5 is another preferred structural block diagram of an apparatus for service equalization according to an embodiment of the present invention;
Fig. 6 is still another preferred structural block diagram of a transfer module in an apparatus for service equalization according to an embodiment of the present invention;
Fig. 7 is a preferred flowchart of a method for service equalization according to an embodiment of the present invention;
Fig. 8 is another preferred flowchart of a method for service equalization according to an embodiment of the present invention;
Fig. 9 is still another preferred flowchart of a method for service equalization according to an embodiment of the present invention;
Fig. 10 is a schematic diagram showing the network architecture of multiple-network access according to an embodiment of the present invention;
Fig. 11 is still another preferred flowchart of a method for service equalization according to an embodiment of the present invention;
Fig. 12 is still another preferred flowchart of a method for service equalization according to an embodiment of the present invention; and
Fig. 13 is still another preferred flowchart of a method for service equalization according to an embodiment of the present invention.

### Detailed Description of the Embodiments

The present invention is described below with reference to the accompanying drawings and examples in detail.

### Example 1

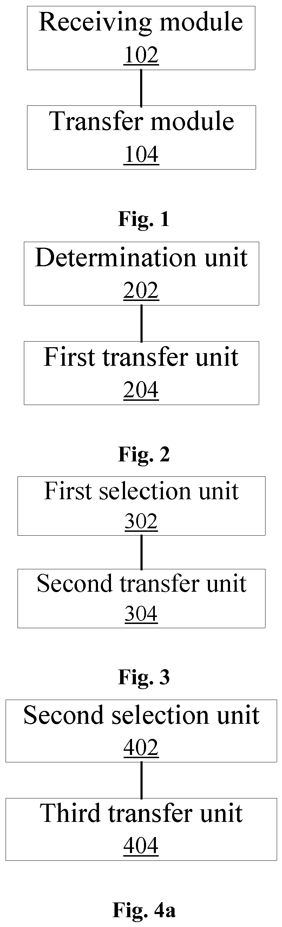

As shown in Fig. 1, an example provides an apparatus for service equalization, including: a receiving module **102** configured to receive service equalization indication information transmitted by a core network; and a transfer module **104** configured to, according to the service equalization indication information, transfer parts of or all of the service bearers of a terminal in the source network to a destination network, wherein the service bearers are user plane connection bearers established for transmitting terminal data.

In the above example, parts of the service bearers in the terminal which need service equalization are transferred to another network according to a service equalization indication message sent by the core network, and service bearer transfer needs not be performed on the service in the terminal as a whole, which realizes partial transfer of the service bearers in the terminal and solves the technical problems in the related art that the scheduling of service equalization is not flexible and the utilization of the network resource is not reasonable, which are caused by transferring all the services of a terminal as a whole between different networks at the time of service equalization, therefore enabling partial transfer of the service bearers in the terminal, increasing the flexible of the service equalization, and realizing the reasonable utilization of the network resource.

The present invention also improves the transfer module **104,** so as to perform different service equalization operations based on different service equalization indication information. In order to realize the above object, in particular, in a preferred implementation of the present invention, as shown in Fig. 2, the transfer module **104** includes: a determination unit **202** configured to, when the service equalization indication information includes the identification information of the terminal, determine a terminal corresponding to the terminal identification information and determine at least one service bearer to be transferred this time in services of the determined terminal; and a first transfer unit **204** configured to transfer the determined service bearer to the destination network.

In a preferred implementation of the present invention, as shown in Fig. 3, the transfer module **104** includes: a first selection module **302** configured to, when the service equalization indication information includes the service bearer identification and/or the service type of the service bearer, select a terminal which performs a service corresponding to the service bearer identification and/or the service type of the service bearer; a second transfer unit **304** configured to transfer at least one service bearer corresponding to the service type to the destination network.

In a preferred implementation of the present invention, as shown in Fig. 4a, the transfer module **104** includes: a second selection unit **402** configured to, when the service equalization indication information includes the destination network information, select a terminal which supports the destination network indicated by the destination network information and determine at least one service bearer to be transferred this time in the services of the determined terminal; a third transfer unit **404** configured to transfer parts of or all of the service bearers in the determined terminal to the destination network indicated by the destination network information.

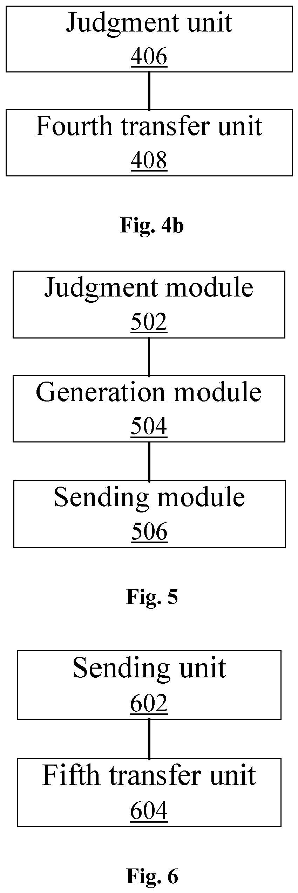

In a preferred implementation of the present invention, as shown in Fig. 4b, the transfer module **104** includes: a judgment unit **406** configured to, when the service equalization indication information includes the network load threshold information, judge whether the network load of the source wireless access network element exceeds the network load threshold; a fourth transfer unit **408** configured to, when the network load of the source wireless access network element exceeds the network load threshold, transfer parts of or all of the service bearers of the terminal in the source network to the destination network.

In order to make rational use of network resources, in a preferred implementation of the present invention, as shown in Fig. 5, the apparatus for service equalization also includes: a judgment module **502** configured to judge whether a load of a network element of the core network exceeds a network element load threshold; a generation module **504** configured to, when load of the network element of the core network exceeds the network element load threshold, generate the service equalization indication information; and a sending module **506** configured to send the service equalization indication information to the source wireless access network element. In the above preferred implementation, only when the core network judges that the load of the network element is too heavy, service equalization indication information will be generated and sent, so as to save the consumption of network resources under the premise of ensuring service equalization. On the basis of various preferred embodiments of the present invention, in an LTE network, the wireless access network element refers to an Evolved Node B (eNB in short), the core network element refers to a Mobility Management Entity (MME in short); in a Universal Mobile Telecommunication System (UMTS in short), the wireless access network element refers to a Radio Network Controller (RNC in short) and an Evolved Node B (Node B) (collectively referred to as Radio Network Subsystem (RNS in short)), the core network element refers to a Serving GPRS Support Node (SGSN in short) or a Mobile Switching Center (MSC in short); and in a Global System for Mobile communication (GSM in short), the wireless access network element refers to a Base Station Controller (BSC in short) and a Base Transceiver Station (BTS in short) (collectively referred to as Base Station System (BSS)), and the core network element refers to SGSN or MSC; and likewise, in other networks, the wireless access network element and the core network element refer to a control node of the wireless access network and a control node of the core network respectively. In the following description, the core network element refers to the core network.

After the source wireless access network element receives service equalization indication information, the subsequent service bearer transfer step is optional and is not to be executed necessarily, and the execution time of the subsequent service bearer transfer step is also determined according to the actual situation and the subsequent service bearer transfer step is not to be executed immediately after the reception of service equalization indication information necessarily. During implementation, the source wireless access network element may perform certain judgment, and then initiate a service bearer transfer operation when a predetermined condition is met. In order to realize the above objective, in particular, on the basis of various preferred embodiments of the present invention, as shown in Fig. 6, the transfer module **104** includes: a sending unit **602** configured to send a handover request message or a redirection request message to the core network, wherein the handover request message or the redirection request message carries information for indicating a terminal involved in a current service equalization and transferring parts of or all of the service bearers on the terminal; and a fifth transfer unit **604** configured to transfer parts of or all of the service bearers of the terminal in the source network to the destination network according to the handover request message or the redirection request message.

In the above preferred implementation, the source wireless access network element uses the existing inter-RAT handover or relocation process to transfer parts of or all of the service bearers of the terminal in the source network to other network, and preferably, the handover request message or redirection request message carries the terminal involved in this service equalization and information for indicating the transfer of parts of or all of the service bearers of the terminal for distinguishing the fact that this service equalization is based on the transfer of parts of service bearers of the terminal rather than the transfer of all of the service bearers of the terminal, and there are few modifications on the system by using the existing handover or relocation process, the realization of the above preferred implementation is simple, and at the same time, an identifier for distinguishing can also be added to distinguish the process from the existing service equalization of transferring all the bearers.

### Example 2

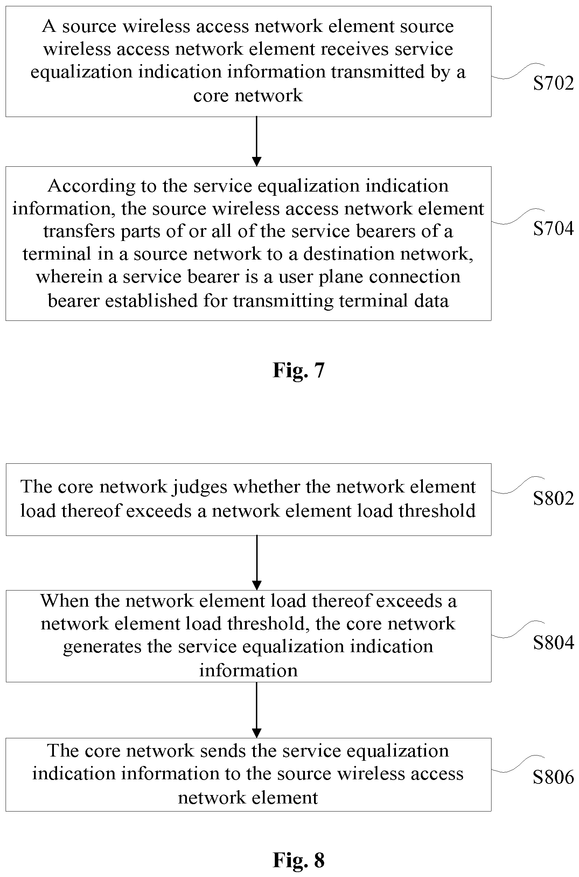

Based on the preferred apparatus for service equalization shown in Figs. 1 to 6, an example also provides a preferred method for service equalization, and as shown in Fig. 7, the method in particular includes step S702 to step S704:
S702: a source wireless access network element receiving service equalization indication information transmitted by a core network; and
S704: the source wireless access network element transferring, according to the service equalization indication information, parts of or all of service bearers of a terminal in a source network to a destination network, wherein the service bearers are user plane connection bearers established for transmitting terminal data.

In the above example, parts of the service bearers in a terminal which need service equalization are transferred to another network according to a service equalization indication message sent by a core network, and service bearer transfer needs not be performed on the service in the terminal as a whole, which realizes partial transfer of the service bearers in the terminal and solves the technical problems in the related art that the scheduling of service equalization is not flexible and the utilization of the network resource is not reasonable, which are caused by transferring all the services of a terminal as a whole between different networks at the time of service equalization, therefore enabling partial transfer of the service bearers in the terminal, increasing the flexible of the service equalization, and realizing the reasonable utilization of the network resource.

In a preferred implementation of the present invention, the service equalization indication information include but is not limited to at least one of the following: identification information of a terminal which needs a service equalization operation, information of one or more service bearers which need the service equalization operation, destination network information about the destination network, and a trigger condition for performing the service equalization operation. In the above preferred implementation, partial transfer of service bearers in the service equalization process can be realized by using the information such as terminal or destination network or trigger condition in the equalization indication information, thereby increasing the flexibility of service equalization.

In a preferred implementation of the present invention, the information of the at least one service bearer includes but is not limited to: service bearer identification and/or service type of the service bearer; the destination network information includes at least one of the following but not limited to: an RAT type of the destination network, cell identification of a destination cell in the destination network, and network element identification of the destination network; and the trigger condition includes but is not limited to: a network load threshold. In the above preferred implementation, by way of particularly defining the information of the at least one service bearer, the transfer of parts of service bearers can be realized using this information of the at least one service bearer.

In order to further describe the service equalization indication information, an example also provides four processes of performing different service bearer transfer operations based on different service equalization information, and four transfer processes will be described below.
1) When the service equalization indication information includes the identification information of the terminal, the step of transferring parts of or all of the service bearers of the terminal in the source network to the destination network includes:
   S1: the source wireless access network element determining a terminal corresponding to the terminal identification information and determining at least one service bearer to be transferred this time in services of the determined terminal; and
   S2: the source wireless access network element transferring the determined service bearer to the destination network.
2) When the service equalization indication information includes the service bearer identification and/or the service type of the service bearer, the step of transferring parts of or all of the service bearers of the terminal in the source network to the destination network includes:
   S1: the source wireless access network element selecting a terminal for executing a service corresponding to the service bearer identification and/or the service type of the service bearer; and
   S2: the source wireless access network element transferring at least one service bearer in selected terminal corresponding to the service type to the destination network.
3) When the service equalization indication information includes destination network information, the step of transferring parts of or all of the service bearers of the terminal in the source network to the destination network includes:
   S1: the source wireless access network element selecting a terminal which supports the destination network indicated by the destination network information and determining, in services of the determined terminal, at least one service bearer to be transferred this time; and
   S2: the source wireless access network element transferring parts of or all of the service bearers in the determined terminal to the destination network indicated by the destination network information.
4) After the source wireless access network element receives service equalization indication information, the subsequent service bearer transfer step is optional and is not to be executed necessarily, and the execution time of the subsequent service bearer transfer is also determined according to the actual situation and the subsequent service bearer transfer is not to be executed immediately after the reception of the service equalization indication information necessarily. The source wireless access network element may perform certain judgment, and then initiate a service bearer transfer operation when a predetermined condition is met. For example, when the service equalization indication information includes a network load threshold, the step of transferring parts of or all of the service bearers of the terminal in the source network to the destination network includes:
   S1: the source wireless access network element judging whether a network load of the source wireless access network element exceeds the network load threshold; and
   S2: when the network load of the source wireless access network element exceeds the network load threshold, the source wireless access network element transferring parts of or all of the service bearers of the terminal in the source network to the destination network.

In order to make rational use of network resources, in a preferred implementation of the present invention, as shown in Fig. 8, before the source wireless access network element receives the service equalization indication information sent by the core network, the method for service equalization further includes step S802 to step S806:
S802: the core network judging whether a network element load of a network element of the core network exceeds a network element load threshold;
S804: when the load of the network element of the core network exceeds the network element load threshold, the core network generating the service equalization indication information; and
S806: the core network sending the service equalization indication information to the source wireless access network element.

In the above preferred implementation, only when the core network judges that the load of the network element is too heavy, service equalization indication information will be generated and sent, so as to save the consumption of network resources under the premise of ensuring service equalization.

On the basis of various preferred embodiments of the present invention, in an LTE network, the wireless access network element refers to an Evolved Node B (eNB in short), the core network element refers to a Mobility Management Entity (MME in short); in a UMTS network, the wireless access network element refers to a Radio Network Controller (RNC in short) and an Node B (Node B) (collectively referred to as Radio Network Subsystem (RNS in short)), the core network element refers to a Serving GPRS Support Node (SGSN in short) or a Mobile Switching Center (MSC in short); and in a GSM network, the wireless access network element refers to a Base Station Controller (BSC in short) and a Base Transceiver Station (BTS in short) (collectively referred to as Base Station System (BSS)), and the core network element refers to SGSN or MSC; and likewise, in other networks, the wireless access network element and the core network element refer to a control node of the wireless access network and a control node of the core network respectively. In the following description, the core network element refers to the core network.

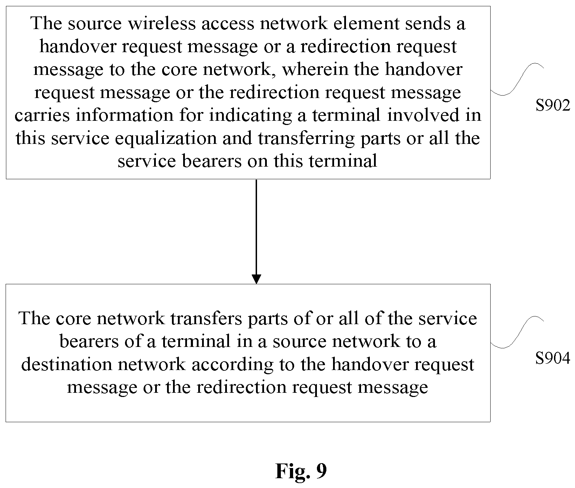

In a preferred implementation of the present invention, as shown in Fig. 9, the step of transferring parts of or all of the service bearers of the terminal in the source network to the destination network includes step S902 to step S904:
S902: the source wireless access network element sending a handover request message or a redirection request message to the core network, wherein the handover request message or the redirection request message carries information for indicating a terminal involved in a current service equalization and transferring parts of or all of the service bearers on the terminal; and Preferably, the parameter carried in the handover request message or the redirection request message for this bearer transfer can be acquired from the service equalization message, and can also be determined by the source wireless access network element according to other network conditions or the condition of the terminal.
S904: the core network transferring parts of or all of the service bearers of the terminal in the source network to the destination network according to the handover request message or the redirection request message.

In the above preferred implementation, the source wireless access network element uses the existing inter-RAT Handover or Relocation process to transfer parts of or all of the service bearers of the terminal in the source network to other network, and preferably, the handover request message or the redirection request message carries the terminal involved in this service equalization and the information for indicating the transfer of parts of or all of the service bearers of the terminal for distinguishing the fact that this service equalization is based on the transfer of parts of service bearers of the terminal rather than the transfer of all the service bearers of the terminal, and there are few modifications on the system by using the existing handover or the relocation process, the realization of the above preferred implementation is simple, and at the same time, an identifier for distinguishing can also be added to distinguish the process from the existing service equalization of transferring all bearers.

On the basis of the examples, the service equalization indication information can be an existing interface message between the core network element and the access network element, and the service equalization indication information can also be a newly introduced interface message.

### Example 3

An example provides a preferred aspect to further explain the present invention, but it should be noted that this preferred aspect is merely for better describing the present invention and does not limit the present invention inappropriately.

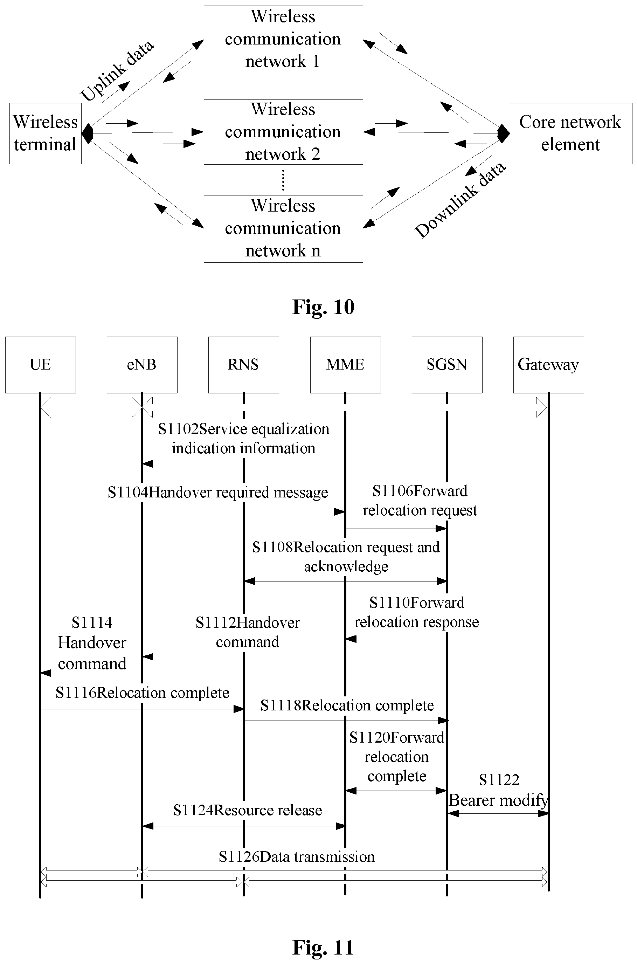

In the example, the employed multiple-network access architecture is as shown in Fig. 10, the wireless terminal or user equipment (UE in short) can access the same core network gateway via a plurality of wireless access technology networks. This gateway is used as an anchor of data distribution, divides the downlink data passing through this core network gateway into a plurality of sub-data streams, and sends the sub-data streams to wireless terminal users via different wireless communication networks (wireless communication network 1, 2 and 3), such as via an LTE network, or a UMTS network or a GSM network and so on; and correspondingly, the wireless terminal user can also send uplink data via one or more of a plurality of accessed networks. Here, the core network gateway can be a data gateway in the existing network, such as a Packet Data Network Gateway (P-GW in short) or a Service Gateway (S-GW in short) in the LTE network, or a Gateway GPRS Support Node (GGSN in short) in the UMTS network.

Based on the above multiple-network access architecture, the present invention provides several preferred examples to realize service equalization of the multiple-network access.

### Preferred example 1

In this preferred example, the service equalization between an LTE and a UMTS network is taken as an example for description. As shown in Fig. 11, a UE is in a connected state in an LTE network, and an eNB has established a plurality of service bearers (such as service bearers 1, 2 and 3) for data transmission for the UE, and the particular processing step of the service equalization includes step S1102 to step S1126.

S1102: an MME judges that the load of the MME is too heavy, and in order to perform load equalization, the MME sends service equalization indication information to the eNB, wherein the service equalization indication information carries identification information of a corresponding UE, the identification of the bearers to be equalized (such as service bearers 1 and 2), and the destination network information of service equalization (such as an RAT type of destination network, i.e. UMTS, and/or destination UMTS cell identification and the corresponding RNC identification). Optionally, the trigger condition for the MME to send a service equalization indication can also be other preset condition, which is not limited here.

S1104: after the eNB receives the service equalization indication information, the eNB decides to initiate service equalization to a UMTS cell. Therefore, the eNB sends a Handover Required message to the MME, wherein the handover required message carries identification information about the service bearer to be transferred (such as service bearers 1 and 2) and the user plane transmission address information corresponding to this service bearer, the identification information about the destination UMTS and the RNC identification, here, the destination UMTS cell can be selected by the eNB according to the UMTS neighbor measurement reported by the UE. Preferably, when the service equalization indication information has the identification information about the destination cell, the cell specified in the service equalization indication information can also be used as the destination cell.

Preferably, before initiating the service equalization process, the eNB can also judge whether to initiate the flow according to the policy of the base station, for example, judges whether the load of the base station is too heavy, or decides whether to initiate the flow according to other factors.

Furthermore, the MME can also indicate the trigger condition for initiating service equalization via a service equalization indication message to the UE. The eNB can also decide whether to initiate the service equalization process according to this condition.

Optionally, in order to distinguish from a general handover process, the eNB can add an indication bit in the handover required message, the indication bit is used for indicating that the current process is an enhanced handover process.

S1106: the MME sends a forward relocation request message to the core network element SGSN of the destination network according to the service equalization information, the Forward Relocation Request message carries the context information about the UE, relevant information about the bearer to be transferred, destination UMTS cell identification and Radio Network Subsystem (RNS in short) identification and so on.

S1108: the SGSN sends a Relocation Request message to the corresponding RNS. If the RNS admits the service bearer to be transferred successfully, the RNS will send a Relocation Request Acknowledge message to the SGSN.

S1110: the SGSN sends a Forward Relocation Response message to the MME which is in the source network.

S1112: the MME sends a Handover Command message to the eNB.

S1114: the eNB sends the UE a handover command message, which is configured for indicating the terminal to hand over the service bearers 1 and 2 to the destination UMTS cell. In order to distinguish form the general handover process, the handover command message may carry corresponding indication information which is configured for indicating a handover based on parts of service bearers of the terminal.

S1116: the UE accesses the RNS in the destination network and sends a Handover to UTRAN Complete message to the RNS.

S1118: the RNS sends a Relocation Complete message to the SGSN for notifying that the terminal has accessed the destination network successfully.

S1120: the SGSN notifies, via a Forward Relocation Complete message, that parts of the service bearers of the MME in the source network have been transferred to the UMTS network successfully.

S1122: the SGSN notifies the gateway to modify the information about the transferred service bearers by a normal Modify Bearer flow, and the data transmitted by subsequent corresponding service bearer needs to be sent to the UE via the UMTS network.

S1124: the MME releases the service bearers which are transferred successfully and the corresponding resources in the source network.

S1126: by then, service equalization based on parts of the service bearers is completed, and at this moment, the UE can access the gateway via the LTE network and the UMTS network simultaneously to perform a data transmission.

In the above steps, as long as the UE is still in a connected state, the flow after the step S1104 can happen at any time after the step S1102, and the eNB may also not initiate the service equalization process of this UE.

Preferably, according to different service equalization indication information, the eNB can also transfer other parts of the service bearers or all of the bearers of the UE to the UMTS network.

Preferably, this process is also suitable for the service equalization among other different RAT networks, and the difference merely lies in the message used among different RATs, which will not be described here.

### Preferred example 2

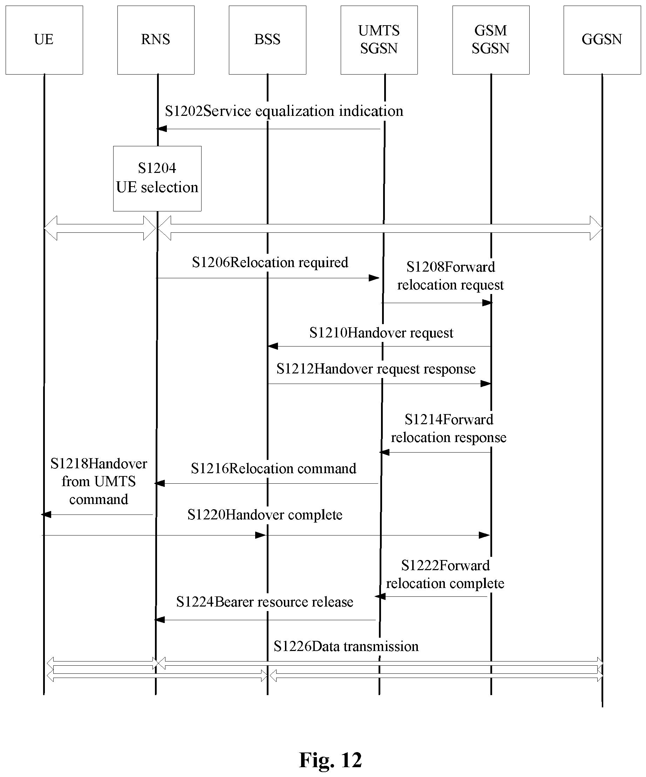

In this preferred example, the service equalization between a UMTS and a GSM network is taken as an example for description, and the particular steps are as shown in Fig. 12, including step S1202 to step S1226.

S1202: when a UMTS SGSN judges that the load of the network element is too heavy, and in order to lower the load, the SGSN sends service equalization indication information to the RNS, the service equalization indication information carries the service type corresponding to the service bearer to be equalized (such as the QoS level identification of the service, that is, Qos Class Identifier (QCI in short), such as QCI1) and destination network information of the service equalization (such as the RAT type of the destination network, which is the GSM in this embodiment, and optionally, particular GSM information can also be carried). Preferably, the trigger condition for the SGSN to send service equalization indication information can also be other preset conditions, or determined according to a particular algorithm, the present invention does not limit the trigger condition.

S1204: the RNS decides to initiate a service equalization process according to the service equalization indication information. The RNS first selects a UE which is performing the service type specified in the service equalization indication message (such as UE1), and the UE1 establishes a plurality of service types (such as QCI1, QCI2, and QCI3) of service bearers (such as service bearers 1, 2 and 3) under the current RNS.

S1206: the RNS selects a destination GSM cell according to the measurement report of the UE1, and sends a Relocation Required message to the UMTS SGSN, the relocation required message carries the identifications of parts of service bearers (bearer 1) and the other context information about the UE. Preferably, in order to distinguish from the general relocation processes, a distinguish identifier can be added in the relocation required message.

S1208: the UMTS SGSN sends a Forward Relocation Request message to the GSM SGSN.

S1210: the GSM SGSN sends a Handover Request message to a base station subsystem BSS.

S1212: when the BSS admits this service bearer successfully, the BSS sends a Handover Response message to the GSM SGSN.

S1214: the GSM SGSN sends a Forward Relocation Response message to the UMTS SGSN.

S1216: the UMTS SGSN sends a Relocation command message to the RNS for indicating the RNS that the destination network has been prepared.

S1218: the RNS sends a Handover from UMTS command message to the UE, the handover command message definitely indicates the identification (such as identification 1) of the service bearer to be transferred by the UE.

S1220: the UE accesses the destination BSS successfully and sends a handover complete message to the GSM SGSN via the BSS.

S1222: the GSM SGSN sends a Forward Relocation Complete message to the UMTS SGSN.

S1224: the UMTS SGSN releases the resources of the service bearer which has been transferred successfully.

S1226: by then, service equalization based on parts of the service bearers is completed, and at this moment, the UE can access the gateway via the GSM network and the UMTS network simultaneously to perform data transmission.

Preferably, the UMTS SGSN can definitely indicate the UE which need service bearer transfer in the service equalization indication information, so that the RNS does not need to select a UE.

Preferably, according to the different service equalization indication information, the RNS can also transfer other parts of the service bearers or all of the bearers of the UE to the GSM network.

Preferably, this process is also suitable for the service equalization among other different RAT networks, and the difference merely lies in the message used among different RATs, which will not be described here.

### Preferred example 3

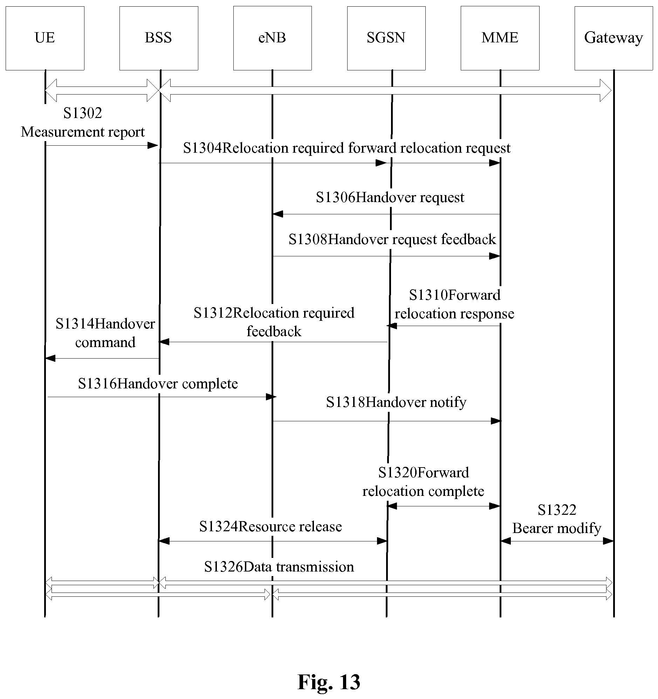

In this preferred example, the service equalization of a UE between a GSM and an LTE network is taken as an example for description, wherein the GSM network is the source network, and the LTE network is the destination network, and the particular steps are as shown in Fig. 13 and include step S1302 to step S1326:
S1302: the SGSN sends service equalization indication information to the BSS, wherein the service equalization indication information carries the RAT type of the destination network of service equalization (which is LTE in this embodiment) and service equalization trigger condition (such as network load threshold).

Preferably, the service equalization indication information may also not carry destination network information.

S1304: the BSS judges whether the load of the current network has exceeded the network load threshold indicated in the service equalization indication information, and when exceeded, the BSS initiates service equalization to the LTE network. With the measurement report of the UE, the BSS can select a UE which is located in the edge of an LTE cell and supports LTE as a UE for service equalization, then the BSS sends a PS Handover Required message to the SGSN, wherein the message carries the identification of the destination LTE cell, the identification information about the UE to be transferred, all bearer identification information and other context information about the UE and so on.

Preferably, when the service equalization indication information sent by the core network element does not carry destination network information, before the UE initiates service equalization, it needs to first specify a destination network selection process, wherein the process can be selected by the BSS via the measurement report result of the UE for a neighbor (such as selecting an LTE cell with better signal quality).

S1306: the SGSN sends a Forward Relocation Request message to the destination core network element MME according to this service equalization indication information.

S1308: the MME sends a handover request message to a corresponding eNB. When the eNB can admit the service bearer to be transferred, the eNB sends Handover Request Acknowledge information to the MME.

S1310: the MME sends a Forward Relocation Response message to the SGSN which is in the source network.

S1312: the SGSN sends a Relocation Required Acknowledge message to the BSS.

S1314: the BSS sends a handover command message to the UE for indicating the terminal to handover to the LTE network.

S1316: the UE accesses the eNB which is in the destination network and sends a Handover to EUTRAN Complete message.

S1318: the eNB sends a Handover Notify message to the MME for notifying that the terminal has accessed the destination network successfully.

S1320: the MME notifies that parts of the service bearers of the SGSN in the source network have been transferred to the LTE network successfully via a Forward Relocation Complete flow.

S1322: the MME notifies the gateway to modify the information about the transferred service bearers via a Modify Bearer flow, and the data transmitted by subsequent corresponding service bearer needs to be sent to the UE via the LTE network.

S1324: the SGSN will release all the service bearers of the UE and the corresponding resources in the source network.

S 1326: by then, the service equalization based on all the service bearers of the UE is completed, and at this moment, the UE can access the gateway via the LTE network to perform data transmission.

Preferably, the BSS can continue performing service equalization based on other UE according to this method; and the SGSN can also definitely specify a UE in the service equalization indication information, and at this moment, the BSS is not required to select a UE;

Preferably, the RNS can also transfer parts of the service bearers of the UE to the LTE network.

Preferably, this process is also suitable for the service equalization among other different RAT networks, and the difference merely lies in the message used among different RATs, which will not be described here.

From the description above, it can be seen that the present invention achieves the following technical effects:
In the present invention, parts of service bearers in a terminal which need service equalization are transferred to another network according to a service equalization indication message sent by a core network, and service bearer transfer needs not be performed on the service in the terminal as a whole, which realizes partial transfer of the service bearers in the terminal and solves the technical problems in the related art that the scheduling of service equalization is not flexible and the utilization of the network resource is not reasonable, which are caused by transferring all the services of a terminal as a whole between different networks at the time of service equalization, therefore enabling parts of the service bearer transfer of a terminal, increasing the flexible of the service equalization, and realizing the reasonable utilization of the network resource.

### Industrial Applicability

The technical solution of the present invention takes into account transferring some services according to a service equalization indication message respectively in combination and need not transfer the services in the terminal as a whole, increasing the flexibility of the service equalization, making rational use of the network resources, and optimizing the overall performance of the system.

Obviously, those skilled in the art should know that each of the mentioned modules or steps of the present invention can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the present invention is not restricted to any particular hardware and software combination.

The descriptions above are only the preferable embodiment of the present invention, which are not used to restrict the present invention, whose scope of protection is defined in the appended claims.

## Claims

1. A method, performed by a source wireless access network element, for enabling partial transfer of service bearers of terminal, the method comprising:
the source wireless access network element receiving service equalization indication information transmitted by a core network; and
the source wireless access network element transferring, according to the service equalization indication information, parts of or all of service bearers of a terminal in a source network to a destination network, wherein the service bearers are user plane connection bearers established for transmitting terminal data;
the method being **characterised in that**:
the service equalization indication information comprises identification information of a terminal which needs a service equalization operation and,
when the service equalization indication information comprises the identification information of the terminal, the source wireless access network element transferring, according to the service equalization indication information, parts of or all of the service bearers of the terminal in the source network to the destination network comprises: the source wireless access network element determining a terminal corresponding to the terminal identification information and determining, in services of the determined terminal, at least one service bearer to be transferred at the time of service equalisation; and the source wireless access network element transferring the at least one determined service bearer to the destination network.

2. The method according to claim 1, wherein the service equalization indication information further comprises at least one of the following: information of at least one service bearer which needs the service equalization operation, destination network information about the destination network, and a trigger condition for performing the service equalization operation.

3. The method according to claim 2, wherein:
the information of the at least one service bearer comprises: service bearer identification and/or service type of the service bearer;
the destination network information comprises at least one of the following: an RAT type of the destination network, cell identification of a destination cell in the destination network, and network element identification of the destination network; and
the trigger condition comprises: a network load threshold.

4. The method according to claim 3 wherein,
when the service equalization indication information comprises the network load threshold,
the source wireless access network element transferring, according to the service equalization indication information, parts of or all of the service bearers of the terminal in the source network to the destination network comprises:
the source wireless access network element judging whether a network load of the source wireless access network element exceeds the network load threshold; and
when the network load of the source wireless access network element exceeds the network load threshold, the source wireless access network element transferring parts of or all of the service bearers of the terminal in the source network to the destination network.

5. The method according to any one of claims 1 to 4, wherein:
the source network comprises: a long term evolution system, LTE, an universal mobile telecommunications system, UMTS, , and/or a global system for mobile communication, GSM;
the source wireless access network element comprises: an evolved node B, eNB, a radio network subsystem RNS, a base station, NodeB, and/or a base station system, BSS; and
the core network comprises: a mobile management entity, MME, a general packet radio service support node, SGSN, , and/or a mobile switching center, MSC.

6. The method according to any one of claims 1 to 4, wherein the source wireless access network element transferring parts of or all of the service bearers of the terminal in the source network to the destination network comprises:
the source wireless access network element sending a handover request message or a relocation request message to the core network, wherein the handover request message or the relocation request message carries information for indicating a terminal involved in a current service equalization and transferring parts of or all of the service bearers on the terminal; and
the core network transferring parts of or all of the service bearers of the terminal in the source network to the destination network according to the handover request message or the relocation request message.

7. An apparatus, comprised in a source wireless access network element, configured to enable partial transfer of service bearers of a terminal, the apparatus comprising:
a receiving module (102) configured to receive service equalization indication information transmitted by a core network; and
a transfer module (104) configured to transfer, according to the service equalization indication information, parts of or all of the service bearers of a terminal in a source network to a destination network, wherein the service bearers are user plane connection bearers established for transmitting terminal data;
the apparatus being **characterised in that**:
the transfer module (104) comprises: a determination unit (202) configured to, when the service equalization indication information comprises the identification information of a terminal which needs a service equalization operation, determine a terminal corresponding to the terminal identification information and determine, in services of the determined terminal, at least one service bearer to be transferred at the time of service equalisation; and a first transfer unit (204) configured to transfer the at least one determined service bearer to the destination network.

8. The apparatus according to claim 7, wherein the transfer module (104) comprises:
a judgment unit (406) configured to, when the service equalization indication information comprises the network load threshold information, judge whether a network load of the source wireless access network element exceeds the network load threshold; and
a second transfer unit (408) configured to, when the network load of the source wireless access network element exceeds the network load threshold, transfer parts of or all of the service bearers of the terminal in the source network to the destination network.

9. The apparatus according to any one of claims 7 to 8, wherein the transfer module (104) comprises:
a sending unit (602) configured to send a handover request message or a relocation request message to the core network, wherein the handover request message or the relocation request message carries information for indicating a terminal involved in a current service equalization and transferring parts of or all of the service bearers on the terminal; and
a third transfer unit (604) configured to transfer parts of or all of the service bearers of the terminal in the source network to the destination network according to the handover request message or the relocation request message.

## Patentansprüche

1. Verfahren, welches von einem Element eines drahtlosen Quell-Zugangs-Netzes durchgeführt wird, zum Ermöglichen von teilweiser Übermittlung von Dienstträgern eines Terminals, wobei das Verfahren umfasst:
Empfangen, durch das Element eines drahtlosen Quell-Zugangs-Netzes, von Dienstentzerrungshinweisinformation, welche von einem Kernnetz übertragen wird; und
Übermitteln, durch das Element eines drahtlosen Quell-Zugangs-Netzes, von Teilen der oder aller von den Dienstträgern eines Terminals in einem Quellnetz an ein Zielnetz gemäß der Dienstentzerrungshinweisinformation, wobei die Dienstträger Verbindungsträger auf Benutzerebene sind, welche für Übertragen von Terminaldaten eingerichtet sind;
wobei das Verfahren **dadurch gekennzeichnet ist, dass**:
die Dienstentzerrungshinweisinformation Identifizierungsinformation eines Terminals umfasst, welche einen Dienstentzerrungsvorgang benötigt, und
wenn die Dienstentzerrungshinweisinformation die Identifizierungsinformation des Terminals umfasst, Übermitteln, durch das Element eines drahtlosen Quell-Zugangs-Netzes, von Teilen der oder aller von den Dienstträgern des Terminals in dem Quellnetz an das Zielnetz gemäß der Dienstentzerrungshinweisinformation umfasst: Bestimmen, durch das Element eines drahtlosen Quell-Zugangs-Netzes, eines Terminals, welches der Terminalidentifizierungsinformation entspricht, und Bestimmen, in Diensten des bestimmten Terminals, zumindest eines Dienstträgers, welcher zu dem Zeitpunkt der Dienstentzerrung übermittelt werden soll;
und Übermitteln, durch das Element eines drahtlosen Quell-Zugangs-Netzes, des zumindest einen bestimmten Dienstträgers an das Zielnetz.

2. Verfahren nach Anspruch 1, wobei die Dienstentzerrungshinweisinformation weiter zumindest eines der folgenden umfasst: Information über zumindest einen Dienstträger, welcher den Dienstentzerrungsvorgang benötigt, Zielnetzinformation über das Zielnetz, und eine Auslösebedingung für das Durchführen des Dienstentzerrungsvorgangs.

3. Verfahren nach Anspruch 2, wobei:
die Information über den zumindest einen Dienstträger umfasst: Dienstträgerinformation und/oder Diensttyp des Dienstträgers;
die Zielnetzinformation zumindest eines der folgenden umfasst: einen RAT-Typ des Zielnetzes, Zellenidentifikation einer Zielzelle in dem Zielnetz und Identifikation des Netzelements des Zielnetzes; und
die Auslösebedingung umfasst: eine Netzlastschwelle.

4. Verfahren nach Anspruch 3, wobei,
wenn die Dienstentzerrungshinweisinformation die Netzlastschwelle umfasst,
Übermitteln, durch das Element eines drahtlosen Quell-Zugangs-Netzes, von Teilen der oder aller von den Dienstträgern des Terminals in dem Quellnetz an das Zielnetz gemäß der Dienstentzerrungshinweisinformation umfasst:
Beurteilen, durch das Element eines drahtlosen Quell-Zugangs-Netzes, ob eine Netzlast des Elements eines drahtlosen Quell-Zugangs-Netzes die Netzlastschwelle übersteigt; und
wenn die Netzlast des Elements eines drahtlosen Quell-Zugangs-Netzes die Netzlastschwelle übersteigt, Übermitteln, durch das Element eines drahtlosen Quell-Zugangs-Netzes, von Teilen der oder aller von den Dienstträgern des Terminals in dem Quellnetz an das Zielnetz.

5. Verfahren nach einem der Ansprüche 1 bis 4, wobei:
das Quellnetz umfasst: ein Long Term Evolution System, LTE, ein Universal Mobile Telecommunications System, UMTS, und/oder ein Global System For Mobile Communication, GSM;
das Element eines drahtlosen Quell-Zugangs-Netzes umfasst: ein Evolved Node B, eNB, ein Funkteilsystem, RNS, eine Basisstation, NodeB, und/oder ein Basisstationssystem, BSS; und
das Kernnetz umfasst: eine Mobilverwaltungsinstanz, MME, einen General Packet Radio Service Support Node, SGSN, und/oder eine Mobilvermittlungsstelle, MSC.

6. Verfahren nach einem der Ansprüche 1 bis 4, wobei Übermitteln, durch das Element eines drahtlosen Quell-Zugangs-Netzes, von Teilen der oder aller von den Dienstträgern des Terminals in dem Quellnetz an das Zielnetz umfasst:
Senden, durch das Element eines drahtlosen Quell-Zugangs-Netzes, einer Handover-Anforderungsnachricht oder einer Verlagerungsanforderungsnachricht an das Kernnetz, wobei die Handover-Anforderungsnachricht oder die Verlagerungsanforderungsnachricht Information zum Hinweisen auf ein Terminal, welches in einer aktuellen Dienstentzerrung involviert ist, und Übermitteln von Teilen der oder aller von den Dienstträgern auf dem Terminal enthält; und
Übermitteln, durch das Kernnetz, von Teilen der oder aller von den Dienstträgern des Terminals in dem Quellnetz an das Zielnetz gemäß der Handover-Anforderungsnachricht oder der Verlagerungsanforderungsnachricht.

7. Einrichtung, welche in einem Element eines drahtlosen Quell-Zugangs-Netzes enthalten ist, welche konfiguriert ist, teilweise Übermittlung von Dienstträgern eines Terminals zu ermöglichen, wobei die Einrichtung umfasst:
ein Empfangsmodul (102), welches konfiguriert ist, Dienstentzerrungshinweisinformation, welche von einem Kernnetz übertragen wird, zu empfangen; und
ein Übermittlungsmodul (104), welches konfiguriert ist, Teile der oder alle von den Dienstträgern eines Terminals in einem Quellnetz an ein Zielnetz gemäß der Dienstentzerrungshinweisinformation zu übermitteln, wobei die Dienstträger Verbindungsträger auf Benutzerebene sind, welche für Übertragen von Terminaldaten eingerichtet sind;
wobei die Einrichtung **dadurch gekennzeichnet ist, dass**:
das Übermittlungsmodul (104) umfasst: eine Bestimmungseinheit (202), welche konfiguriert ist, wenn die Dienstentzerrungshinweisinformation die Identifizierungsinformation eines Terminals umfasst, welches einen Dienstentzerrungsvorgang benötigt, ein Terminal zu bestimmen, welches der Terminalidentifizierungsinformation entspricht, und in Diensten des bestimmten Terminals zumindest einen Dienstträger zu bestimmen, welcher zu dem Zeitpunkt der Dienstentzerrung übermittelt werden soll;
und eine erste Übermittlungseinheit, (204), welche konfiguriert ist, den zumindest einen bestimmten Dienstträger an das Zielnetz zu übermitteln.

8. Einrichtung nach Anspruch 7, wobei das Übermittlungsmodul (104) umfasst:
eine Beurteilungseinheit (406), welche konfiguriert ist, wenn die Dienstentzerrungshinweisinformation die Netzlastschwelle umfasst, zu beurteilen, ob eine Netzlast des Elements eines drahtlosen Quell-Zugangs-Netzes die Netzlastschwelle übersteigt; und
eine zweite Übermittlungseinheit (408), welche konfiguriert ist, wenn die Netzlast des Elements eines drahtlosen Quell-Zugangs-Netzes die Netzlastschwelle übersteigt, Teile der oder alle von den Dienstträgern des Terminal in dem Quellnetz an das Zielnetz zu übermitteln.

9. Einrichtung nach einem der Ansprüche 7 bis 8, wobei das Übermittlungsmodul (104) umfasst:
eine Sendeeinheit (602), welche konfiguriert ist, eine Handover-Anforderungsnachricht oder eine Verlagerungsanforderungsnachricht an das Kernnetz zu senden, wobei die Handover-Anforderungsnachricht oder die Verlagerungsanforderungsnachricht Information zum Hinweisen auf ein Terminal, welches in einer aktuellen Dienstentzerrung involviert ist, und Übermitteln von Teilen der oder aller von den Dienstträgern auf dem Terminal enthält; und
eine dritte Übermittlungseinheit (604), welche konfiguriert ist, Teile der oder alle von den Dienstträgern des Terminals in dem Quellnetz an das Zielnetz gemäß der Handover-Anforderungsnachricht oder der Verlagerungsanforderungsnachricht zu übermitteln.

## Revendications

1. Procédé, réalisé par un élément de réseau d'accès sans fil source, pour permettre un transfert partiel de supports de service d'un terminal, le procédé comprenant :
la réception, par l'élément de réseau d'accès sans fil source, d'informations d'indication d'équilibrage de services transmises par un réseau fédérateur ; et
le transfert, par l'élément de réseau d'accès sans fil source, selon les informations d'indication d'équilibrage de services, de parties ou de l'intégralité de supports de service d'un terminal dans un réseau source à un réseau de destination, dans lequel les supports de service sont des supports de connexion de plan d'utilisateur établis pour transmettre des données de terminal ;
le procédé étant **caractérisé en ce que** :
les informations d'indication d'équilibrage de services comprennent des informations d'identification d'un terminal qui nécessitent une opération d'équilibrage de services, et
lorsque les informations d'indication d'équilibrage de services comprennent les informations d'identification du terminal, le transfert, par l'élément de réseau d'accès sans fil source, selon les informations d'indication d'équilibrage de services, de parties ou de l'intégralité des supports de service du terminal dans le réseau source au réseau de destination comprend : par l'élément de réseau d'accès sans fil source, la détermination d'un terminal correspondant aux informations d'identification de terminal et la détermination, dans des services du terminal déterminé, d'au moins un support de service à transférer au temps d'équilibrage de services ;
et par l'élément de réseau d'accès sans fil source, le transfert de l'au moins un support de service déterminé au réseau de destination.

2. Procédé selon la revendication 1, dans lequel les informations d'indication d'équilibrage de services comprennent en outre au moins un de ce qui suit : des informations d'au moins un support de service qui nécessite l'opération d'équilibrage de services, des informations de réseau de destination au sujet du réseau de destination et une condition de déclencheur pour réaliser l'opération d'équilibrage de services.

3. Procédé selon la revendication 2, dans lequel :
les informations de l'au moins un support de service comprennent : une identification de support de service et/ou un type de service du support de service ;
les informations de réseau de destination comprennent au moins un de ce qui suit : un type de RAT du réseau de destination, une identification de cellule d'une cellule de destination dans le réseau de destination, et une identification d'élément de réseau du réseau de destination ; et
la condition de déclencheur comprend : un seuil de charge de réseau.

4. Procédé selon la revendication 3, dans lequel, lorsque les informations d'indication d'équilibrage de services comprennent le seuil de charge de réseau,
le transfert, par l'élément de réseau d'accès sans fil source, selon les informations d'indication d'équilibrage de services, de parties ou de l'intégralité des supports de service du terminal dans le réseau source au réseau de destination comprend :
le fait de juger, par l'élément de réseau d'accès sans fil source, si une charge de réseau de l'élément de réseau d'accès sans fil source excède le seuil de charge de réseau ; et
lorsque la charge de réseau de l'élément de réseau d'accès sans fil source excède le seuil de charge de réseau, le transfert, par l'élément de réseau d'accès sans fil source, de parties ou de l'intégralité des supports de service du terminal dans le réseau source au réseau de destination.

5. Procédé selon l'une quelconque des revendications 1 à 4, dans lequel :
le réseau source comprend : un système d'évolution à long terme, LTE, un système universel de télécommunications avec les mobiles, UMTS, et/ou un système global de télécommunication avec les mobiles, GSM ;
l'élément de réseau d'accès sans fil source comprend : un noeud évolué B, eNB, un sous-système de réseau radio, RNS, une station de base, NodeB, et/ou un système de station de base, BSS ; et
le réseau fédérateur comprend : une entité de gestion de mobilité, MME, un noeud de support de service général de radiocommunication en mode paquet, SGSN, et/ou un centre de commutation pour les services mobiles, MSC.

6. Procédé selon l'une quelconque des revendications 1 à 4, dans lequel le transfert, par l'élément de réseau d'accès sans fil source, de parties ou de l'intégralité des supports de service du terminal dans le réseau source au réseau de destination comprend :
par l'élément de réseau d'accès sans fil source, l'envoi d'un message de demande de transfert intercellulaire ou d'un message de demande de relocalisation au réseau fédérateur, dans lequel le message de demande de transfert intercellulaire ou le message de demande de relocalisation transporte des informations pour indiquer un terminal impliqué dans un équilibrage de services actuel et le transfert de parties ou de l'intégralité des supports de service sur le terminal ; et
le transfert, par le réseau fédérateur, de parties ou de l'intégralité des supports de service du terminal dans le réseau source au réseau de destination selon le message de demande de transfert intercellulaire ou selon le message de demande de relocalisation.

7. Appareil, compris dans un élément de réseau d'accès sans fil source, configuré pour permettre un transfert partiel de supports de service d'un terminal, l'appareil comprenant :
un module de réception (102) configuré pour recevoir des informations d'indication d'équilibrage de services transmis par un réseau fédérateur ; et
un module de transfert (104) configuré pour transférer, selon les informations d'indication d'équilibrage de services, des parties ou l'intégralité des supports de service d'un terminal dans un réseau source au réseau de destination, dans lequel les supports de service sont des supports de connexion de plan d'utilisateur établis pour transmettre des données de terminal ;
l'appareil étant **caractérisé en ce que** :
le module de transfert (104) comprend : une unité de détermination (202) configurée pour, lorsque les informations d'indication d'équilibrage de services comprennent les informations d'identification d'un terminal qui nécessite une opération d'équilibrage de services, déterminer un terminal correspondant aux informations d'identification de terminal et déterminer, dans des services du terminal déterminé, au moins un support de service à transférer au temps d'équilibrage de services ;
et une première unité de transfert (204) configurée pour transférer l'au moins un support de service déterminé au réseau de destination.

8. Appareil selon la revendication 7, dans lequel le module de transfert (104) comprend :
une unité de jugement (406) configurée pour, lorsque les informations d'indication d'équilibrage de services comprennent les informations de seuil de charge de réseau, juger si une charge de réseau de l'élément de réseau d'accès sans fil source excède le seuil de charge de réseau ; et
une deuxième unité de transfert (408) configurée pour, lorsque la charge de réseau de l'élément de réseau d'accès sans fil source excède le seuil de charge de réseau, transférer des parties ou l'intégralité des supports de service du terminal dans le réseau source au réseau de destination.

9. Appareil selon l'une quelconque des revendications 7 à 8, dans lequel le module de transfert (104) comprend :
une unité d'envoi (602) configurée pour envoyer un message de demande de transfert intercellulaire ou un message de demande de relocalisation au réseau fédérateur, dans lequel le message de demande de transfert intercellulaire ou le message de demande de relocalisation transporte des informations pour indiquer un terminal impliqué dans un équilibrage de services actuel, et pour transférer des parties ou l'intégralité des supports de service sur le terminal ; et
une troisième unité de transfert (604) configurée pour transférer des parties ou l'intégralité des supports de service du terminal dans le réseau source au réseau de destination selon le message de demande de transfert intercellulaire ou le message de demande de relocalisation.
